Europäisches Patentamt

European Patent Office

Office européen des brevets

(19)

(11) Numéro de publication: **0 033 046**
**B1**

(12) **FASCICULE DE BREVET EUROPEEN**

(45) Date de publication du fasciculè du brevet: **08.08.84**

(21) Numéro de dépôt: **80401855.4**

(22) Date de dépôt: **23.12.80**

(51) Int. Cl.³: **G 11 B 7/24, B 41 M 5/24, B 41 M 5/26**

(54) Procédé d'inscription thermo-optique d'information et support d'information destiné à la mise en oeuvre de ce procédé.

(30) Priorité: **23.01.80 FR 8001425**

(43) Date de publication de la demande:
**05.08.81 Bulletin 81/31**

(45) Mention de la délivrance du brevet:
**08.08.84 Bulletin 84/32**

(84) Etats contractants désignés:
**DE GB IT NL SE**

(56) Documents cités:
**EP - A - 0 010 017**
**EP - A - 0 022 313**
**DE - A - 2 925 767**
**DE - B - 2 701 218**
**FR - A - 2 111 204**
**FR - A - 2 126 387**
**FR - A - 2 214 934**
**FR - A - 2 236 243**
**FR - A - 2 368 779**
**US - A - 3 171 744**
**US - A - 3 644 014**
**US - A - 4 032 691**

(73) Titulaire: **THOMSON-CSF**
**173, Boulevard Haussmann**
**F-75379 Paris Cedex 08 (FR)**

(72) Inventeur: **Cornet, Jean**
**THOMSON-CSF SCPI 173, Bld Haussmann**
**F-75360 Paris Cedex 08 (FR)**
Inventeur: **Lehureau, Jean-Claude**
**THOMSON-CSF SCPI 173, Bld Haussmann**
**F-75360 Paris Cedex 08 (FR)**
Inventeur: **Magna, Henriette**
**THOMSON-CSF SCPI 173, Bld Haussmann**
**F-75360 Paris Cedex 08 (FR)**

(74) Mandataire: **Wang, Pierre et al,**
**THOMSON-CSF SCPI 173, Bld Haussmann**
**F-75379 Paris Cedex 08 (FR)**

(56) Documents cités:
**IBM TECHNICAL DISCLOSURE BULLETIN, vol. 6,
no. 12, mai 1964, New York, US H.R.
ANDERSON Jr.: "Materials for thermoplastic
recording by heat alone", page 3
PATENT ABSTRACTS OF JAPAN, vol. 3, no.
119, 6 octobre 1979, page 2E142**

Courier Press, Leamington Spa, England.

**Description**

La présente invention se rapporte à l'inscription sur un support d'éléments d'information susceptibles d'être lus optiquement. Elle vise plus particulièrement un procédé d'inscription thermo-optique et en support thermosensible qui autorisent la lecture des éléments d'information immédiatement après leur enregistrement sans qu'il soit nécessaire de prévoir un traitement tel qu'un développement chimique ou thermique.

Il est connu du document DE—B—2 701 218 un processus d'inscription thermo-optique qui consiste à créer préalablement dans une couche thermoplastique un état mécanique de précontrainte. L'irradiation de cette couche précontrainte convenablement lissée et métallisée en surface fournit un relief correspondant à la relaxation thermique de cet état dans des régions qui représentant l'information à emmagasiner.

Il est également connu du document FR—A—2 111 204 un processus d'inscription thermo-optique qui consiste à créer à la surface d'une couche thermofusible des boursouflures qui altèrent l'aspect lisse initial de la couche. Dans le document DE—A—2 925 767 est décrit un processus d'inscription thermo-optique basé sur la déformation par fusion, vaporisation ou agrégation, laquelle comporte un changement d'état d'une couche thermoinscriptible. Pour éviter que la couche thermoinscriptible ne souffre de plissements ou fêlures, il est prévu d'incorporer un plastifiant à une couche adjacente de polyéthylène chloré.

Le document EP—A—22 313 décrit un processus d'inscription thermo-optique visant à obtenir immédiatement et sans développement ultérieur des irrégularités de surface par induction d'explosion locales au sein d'une couche thermosensible. Dans le cas d'explosion partielle, la couche présente une bosse sans rupture de sa surface. Une couche métallique peut subséquemment être déposée à la surface bosselée de la couche thermosensible, mais il est également prévu de revêtir la couche thermosensible d'une mince couche métallique préalablement à l'inscription. L'état chimique de la couche thermosensible est affecté par l'inscription thermo-optique, même dans le cas d'explosions partielles.

L'utilisation d'un faisceau laser focalisé a été proposée comme moyen d'inscription en combinaison avec des structures de support d'information comprenant généralement des matériaux en couches minces d'épaisseur comprise entre 30 et 100 nm. Dans les réalisations connues, notamment du document FR—A—2 368 779, la densité surfacique d'énergie mise en oeuvre pour obtenir par exemple l'ablation thermique localisée d'une couche est relativement élevée. Comme couche, on a proposé des semi-métaux à bas point de fusion tels que le bismuth ou le tellure. Cependant l'exérience montre que ces semi-métaux ne donnent des empreintes à bords reproductibles qui si la taille de ces empreintes est suffisante, ce qui limite fortement la capacité de stockage du matériau. De son côté, la densité surfacique d'énergie requise pour la formation d'une empreinte permanente est normalement supérieure à 80 mJ . cm$^{-2}$ de sorte que les lasers de faible puissance ne sont pas envisageables dès que le débit d'information est supérieur à quelques M bits s$^{-1}$.

En dehors des semi-métaux, il existe des matériaux fonctionnant par ablation thermique tels que les alliages chalcogénure vitreux qui présentent une plus faible diffusivité thermique et dont les couches sont plus isotropes. Ces matériaux offrent une plus grande sensibilité et permettent d'obtenir par ablation des empreintes ayant un profil plus reproductible, même à l'échelle de 0,5 $\mu$m. Cependant, ici encore, par suite du processus lui-même d'ablation thermique, les emprintes en forme de cuvette sont entourées d'un bourrelet qui est à l'origine d'un bruit important se superposant au signal de lecture.

Au lieu d'utiliser comme support d'information un substrat muni d'une seule couche thermosensible, on a songé à recouvrir une couche organique thermodégradable d'une couche métallique mince. Dans ce cas, l'énergie rayonnée d'inscription est convertie en énergie thermique par la couche métallique et la chaleur ainsi créée sert à produire un changement d'état localisé dans la couche thermodégradable. Les produits de décomposition créent une microbulle gazeuse capable de percer la couche métallique et de l'attaquer chimiquement. Ici encore, les empreintes obtenues ont un bord irrégulier qui ne se prête pas au stockage de signaux vidéo de bonne qualité.

La présente invention a pour objet un procédé d'inscription thermo-optique d'information consistant à échauffer superficiellement à l'aide d'un faisceau de rayonnement focalisé et modulé en intensité un support d'information thermosensible comportant une couche métallique qui recouvre une couche organique déposée sur un substrat, l'impact localisé du faisceau créant une élévation de température transitoire qui intéresse l'ensemble couche métallique-couche organique, caractérisé en ce que ladite élévation de température, sans libérer une énergie mécanique préexistante dans ladite couche organique et sans modifier son état chimique, produit par dilatation thermique différentielle desdites couches un étirement irréversible de ladite couche métallique; ladite couche organique étant faite d'au moins un matériau polymère auquel a été incorporée au moins une substance plastifiante destinée à donner à ladite dilatation différentielle une valeur telle que la tension d'étirement soit comprise entre la limite élastique ($\sigma_L$) et la charge de rupture ($\sigma_R$) de ladite couche métallique.

L'invention a également pour objet un support d'information destiné à la mise en ouevre du procédé selon la revendication 1, comprenant un substrat sur lequel est déposée une couche organique recouverte d'une couche métallique, caractérisé en ce que la couche métallique a une épaisseur comprise entre 5 et 10 nm et une dictilité statique d'au moins 40%; la couche organique étant constituée par au moins un polymère de base auquel est incorporé un adjuvant ayant des propriétés plastifiantes.

L'invention sera mieux comprise au moyen de la description ci-après et des figures annexées parmi lesquelles:

— la figure 1 représente un faisceau d'inscription et l'empreinte laissée sur un support d'information lorsque la puissance du faisceau produit une ablation thermique ou un perçage localisé;
— la figure 2 montre l'empreinte permanente obtenue par le procédé conformé à l'invention;
— les figures 3 et 4 sont des diagrammes explicatifs;
— la figure 5 est une vue en coupe d'un support d'information conforme à l'invention;
— la figure 6 est une vue en coupe d'une variante de réalisation du support d'information conforme à l'invention.

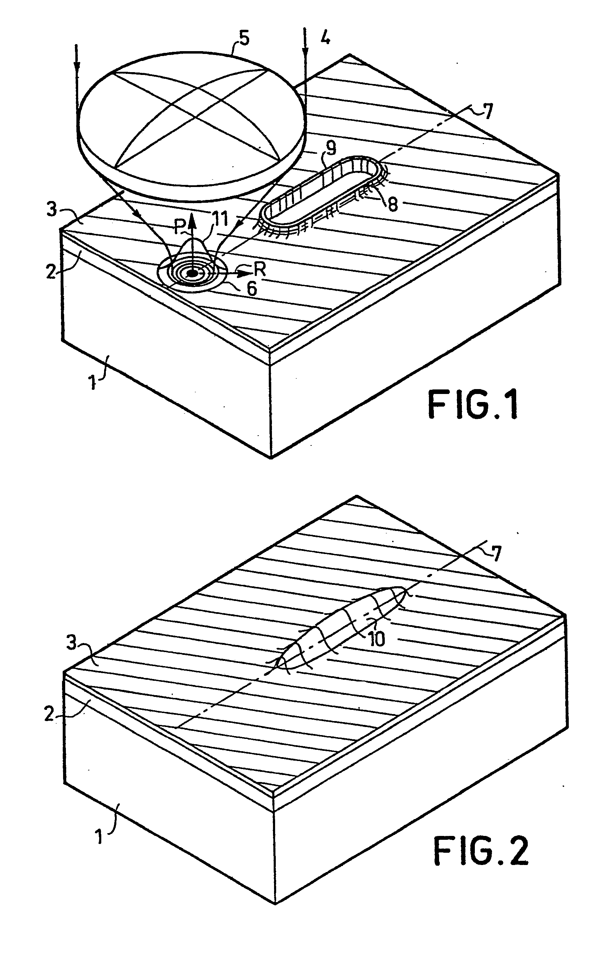

Sur la figure 1, on peut voir un support d'information comprenant un substrat 1 porteur d'une couche 2 de substance organique. La couche 2 est recouverte par une couche 3, par exemple métallique, qui est soumise à l'ablation thermique en vue d'obtenir une empreinte permanente 8 le long d'un axe 7. L'ablation thermique superficielle est réalisée selon le mode représenté au moyen d'un faisceau d'énergie rayonnée 4 que l'on focalise à la surface de la couche 3 au moyen d'un objectif 5. Dans le cas d'une forme de révolution, le spot inscripteur 6 fournit une puissance qui décroît radialement à partir du point de focalisation situé sur l'axe 7 de la piste à inscrire. Le profil 11 illustre cette variation de puissance incidente dans le système d'axe P, R où P désigne la puissance et R le rayon passant par le point de focalisation. Compte tenu de la puissance incidente et de la vitesse de translation du spot 6 le long de l'axe 7, on peut obtenir un échauffement localisé de la couche 3 et de sa voisine 2 tel qu'il y ait ablation thermique par fusion de la couche 3. La couche 3 peut également subir localement un perçage provoqué par les produits de décomposition de la sous-couche 2 lorsque celle-ci se dégrade thermiquement. Par ces mécanismes d'inscription thermique, on obtient une empreinte 8 en forme de cuvette plus ou moins allongée avec un bourrelet 9 dont les caractéristiques géométriques sont difficilement reproductibles.

Sur la figure 2, on peut voir une empreinte 10 qui ne présente ni bourrelet ni déchirure de la couche 3. Conformément à l'invention, le relief de l'empreinte 10 se maintient de façon permanente après le passage de l'impulsion lumineuse, car il résulte d'une déformation plastique de la couche 3 engendrée par la dilatation thermique transitoire de la sous-couche 2. A cet effet le support 1 porte une sous-couche 2 d'un matériau organique thermodéformable ayant une épaisseur de l'ordre de 50 à 300 nm et cette sous-couche 2 est recouverte d'une fine couche métallique 3 ayant une épaisseur de l'ordre de 5 à 10 nm. Le support 1 peut être quelconque, métallique, vitreux ou organique, opaque ou transparent, souple ou rigide, d'épaisseur également quelconque. A titre d'exemple non limitatif, le support 1 est un support transparent et rigide de 1 à 2 mm d'épaisseur.

La sous-couche 2 est choisie de préférence fortement dilatable thermiquement, mais le matériau utilisé ne doit subir aucune dégradation ou décomposition notable pendant le processus d'inscription thermique.

La couche métallique 3 remplit plusieurs fonctions. Elle sert à convertir le rayonnement incident en énergie thermique, ce qui suppose qu'elle absorbe le rayonnement inscripteur. Cette couche doit en outre épouser le gonflement thermique transitoire de la sous-couche 2. A cet effet, elle est faite d'un matériau ductile de façon à être le siège d'une déformation plastique au cours du processus d'enregistrement. Enfin, l'allongement de rupture de matériau constituant la couche 3 doit être suffisamment grand pour que celle-ci conserve son intégrité lors du gonflement thermique transitoire de la sous-couche 2. Etant donné que le processus d'inscription thermique n'entraîne ni perçage de la couche 3, ni formation d'un bourrelet autour de l'empreinte, on obtient ou bon rapport signal à bruit lors de la lecture. En outre, l'absence de changement d'état permet d'obtenir une bonne inscription avec une densité surfacique d'énergie de 20 à 40 mJ . cm$^{-2}$.

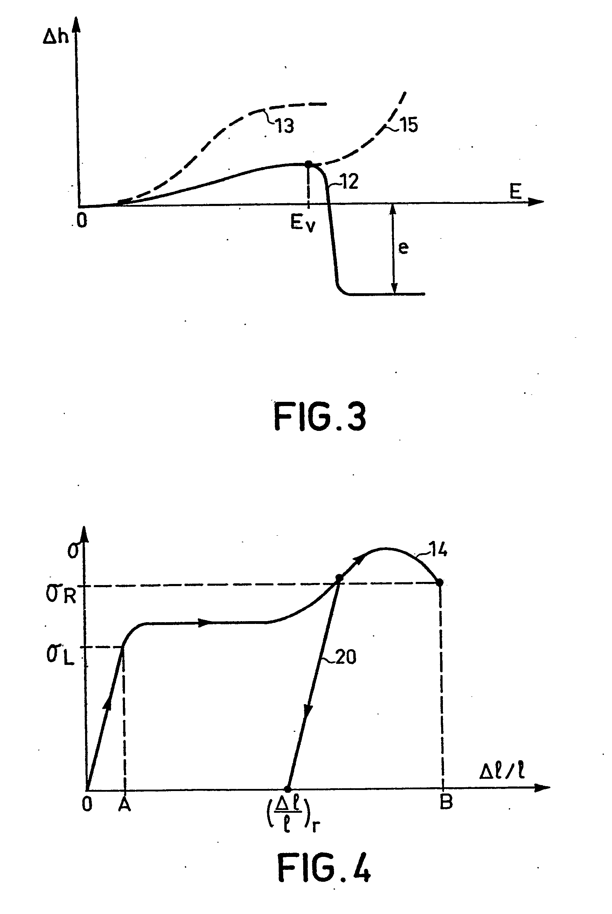

La figure 3 est un relevé expérimental montrant en fonction de la densité surfacique d'énergie E comment évolue l'amplitude $\Delta h$ du relief que l'on peut obtenir avec un support d'information tel que celui de la figure 1. La courbe 12 montre que le relief de l'empreinte prend une amplitude croissante en régime transitoire jusqu'à ce que l'on atteigne une densité d'énergie $E_V$ au-dessus de laquelle on observe un changement d'état qui se manifeste par ablation ou perçage de la couche métallique. La branche en trait plein de la courbe 12 située à droite de l'abscisse $E_V$ indique que la couche 3 a subi une ablation; il en résulte un relief négatif d'amplitude e. Dans une autre configuration, on peut observer un gonflement qui se termine par un perçage de la couche 3; ne cas est illustré par le branche en pointillé 15.

Conformément à l'invention, on réalise l'empreinte avec une densité d'énergie inférieure à $E_v$, afin que ni la couche 3, ni la sous-couche 2 ne subissent un changement d'état. Pour obtenir dans ces conditions une empreinte permanente, on réalise une déformation plastique de la couche 3, celle-ci étant induite par une forte dilatation thermique transitoire de la sous-couche 2. A titre d'exemple, la courbe 13 illustre la dilatation transitoire obutenu en ajoutant au matériau organique de la sous-couche 2 un plastifiant. Le plastifiant modifie les propriétés thermiques et mécaniques du polymère auquel on l'incorpore. L'introduction du plastifiant diminue la densité du polymère, abaisse son point de ramolilissement, sa viscosité à une température donnée, sa limite élastique et sa dureté. En outre, le plastifiant augmente sensiblement le coefficient de dilatation thermique et l'élongation à la rupture.

La figure 4 illustre le mode d'action de la couche 3 dans le processus d'inscription. Le diagramme représente l'allongement relatif $\Delta 1/1$ en fonction de la tension mécanique $\sigma$ créée dans la couche 3 par le gonflement localisé de la sous-couche 2. Pour un allongement relatif compris entre 0 et A, la couche 3 se déforme élastiquement comme le montre la portion linéaire de la courbe de charge 14 et cette déformation est réversible. Dès que l'on dépasse la limite élastique $\sigma_L$, on constate un fort allongement relatif dans une zone de déformation plastique qui comporte, une plage quasi horizontale suivie d'une plage arrondie où le matériau atteint la charge de rupture. Après passage de l'onde de chaleur, la relaxation de la sous-couche 2 laisse subsister un allongement permanent

$$\left(\frac{\Delta 1}{1}\right)_r$$

que l'on obtient en traçant la ligne de déchargement 20. Pour une onde de chaleur plus intense, on peut faire atteindre à la couche 3 l'allongement de rupture OB. La zone d'allongement plastique qui s'étend entre les points A et B est celle dans laquelle la couche 3 s'étire fortement avec un effet de striction qui l'amène finalement à se rompre pour une tension $\sigma_R$ inférieure à la charge de rupture. En fait, c'est le coefficient de dilatation différentiel entre la sous-couche 2 et la couche métallique 3 qui détermine l'ampleur de la déformation plastique résultant de l'inscription thermique. En utilisant une sous-couche 2 fortement plastifiée, il n'est pas rare que le coefficient de dilatation différentiel soit aussi élevé que $10^{-4} K^{-1}$. L'élévation de température de la couche métallique 3 soumise à une faisceau laser de diamètre égal à un micron et de puissance égale à quelques milliwatts peut atteindre quelques centaines de degrés Kelvin au bout de 50 ns. Il en résulte que la dilatation en surface dûe un gonflement de la sous-couche 2 peut atteindre 4%. Environ 0,2% de cette dilatation peut se résorber élastiquement après passage de l'onde de chaleur. Le reliquat de déformation de la sous-couche a donc produit une déformation plastique créant le relief permanent de la figure 2. La hauteur de ce relief peut aisément atteindre 200 nm. En exagérant la puissance du faisceau inscripteur, il peut y avour une dégradation du plastifiant puis celle du polymère. Il en résulterait la formation d'une bulle gazeuse avec au bout d'un certain temps le perçage de la couche 3. Cette éventualité sort du cadre de la présente invention.

Le procédé d'inscription par déformation plastique conforme à l'invention est applicable à la quasi totalité des polymères thermoplastiques non dégradables à basse température. Le choix des substances organiques destinées à constituer la sous-couche 2 prend en considération la facilité de dépôt en couche mince ou semi-épaisse sur de grandes surfaces, la qualité microscopique de la couche (continuité, absence de granulation ou autres défauts), sa transparence et son adhérence au substrat 1.

A tire d'exemples non limitatifs, on peut adopter pour la sous-couche le polymethacrylate de méthyle, le polystyrène, les polycarbonates, polyuréthanes, les dérivés de la cellulose (nitrocellulose, acétate de cellulose, ethylcelullose, acétobutyrate de cellulose); ces substances peuvent être mises en solution et déposées après plastification sur le substrat choisi. Comme solvants, on peut adopter des solvants simples à forte tension de vapeur tels que: acétone, cyclohexanone ou le mélange de solvants défini sous l'appellation "AZ Thinner" par la firme Shipley. Le couchage de la sous-couche 2 peut se faire par tirage ou par centrifugation. D'autres méthodes de dépôt de la sous-couche 2 sont également utilisables, telles que la sublimation sous vide et la pulvérisation cathodique.

En ce qui concerne les adjuvants utilisés pour plastifier les polymères de base, on peut citer les diesters linéaires saturés comme les adipates, azélates et sébacates d'isodecyl, de butoxyethyl ou d'éthylhexyl. Entrent également en ligne de compte, les diesters cycliques comme les phtalates d'isodecyl, de cyclohexyl ou d'ethylhexyl. Tous ces plastifiants peuvent être incorporés aux polymères de base avec des tenerus allant jusqu'à 75%.

Pour la réalisation de la couche 3, les métaux sont choisis en fonction de leur ductilité et de leur aptitude à former des couches minces dépourvues de contraintes. En effet, quoique les élongations subïes par la couche métallique 3 ne dépassent pas quelques pourcents, la vitesse à laquelle se produit la déformation implique l'utilisation d'une couche résistante au choc et présentant une ductilité statique d'au moins 40%. L'existence de contraintes dans la couche métallique peut être nuisible à la bonne conservation des données inscrites, car de telles contraintes conduiraient à plus ou moins longue échéance à une relaxation dans le polymère plastifié.

En pratique, il y a lieu de déposer la couche 3 à faible vitesse ($2 \cdot 10^{-2}$ à $10^{-1}$ nm . s$^{-1}$. L'épaisseur du dépôt est préférentiellement inférieure ou égale à 10 nm. Une faible dureté et une bonne résistance à l'oxydation sont également souhaitables. L'oxydation même légère peut durcir suffisamment la couche métallique pour y induire des contraintes. D'autre part, l'oxydation introduit un risque d'inhomogénéité puis-qu'elle influence le pouvoir absorbant de la couche métallique.

Compte tenu de ce qui précède, le choix peut se porter de préférence sur l'or, l'argent et le platine. On peut également utiliser des alliages entre ces métaux dans la mesure où ces alliages sont en phase homogène et ont une faible dureté, ce qui est le cas des alliages Au—Ag. Afin de diminuer le prix de revient pour le dépôt de la couche 3, on peut aussi allier à l'or, à l'argent ou au platine l'un quelconque ou un ensemble des éléments suivants: Zinc, bismuth, nickel, cuivre et germanium dans la mesure où la teneur en métal précieux reste supérieure ou égale à 60% en poids de façon à conserver une excellente résistance à l'oxydation et à rester en phase homogène de grande ductilité et de faible dureté. C'est ainsi que les alliages Au—Ag—Cu utilisés en bijouterie sont utilisables. D'autre part, la demanderesse a obtenu d'excellents résultats avec des alliages Au—Cu dans des proportions massiques en cuivre allant jusqu'à 40% en particulier pour la composition $Cu_{20}$ $Au_{80}$. Tous ces métaux permettent de réaliser des couches minces ayant un pouvoir absorbant voisin de 50% pour le rayonnement incident lorsque l'épaisseur de ces couches est comprise entre 4 et 10 nm.

On a vu au sujet de la figure 4, qu'avant d'atteindre la charge de rupture, la tension mécanique $\sigma$ subit un accroissement qui signale en fait une réduction d'épaisseur. Cet effet, sensible dans toute l'étendue de la zone de déformation plastique peut être mise à profit pour lire l'empreinte par la diminution locale de la réflectance et par l'augmentation corrélative de la transmittance de la couche métallique. On dispose donc d'un contraste d'amplitude qui vient compléter le contraste de phase lié au relief de l'empreinte.

La finesse de la couche 3 et la faible tenue mécanique de la sous-couche 2 plastifiée rendent le support d'information assez vulnérable aux manipulations de sorte qu'il peut être utilise de protéger les éléments sensibles du support d'information au moyen d'un capot.

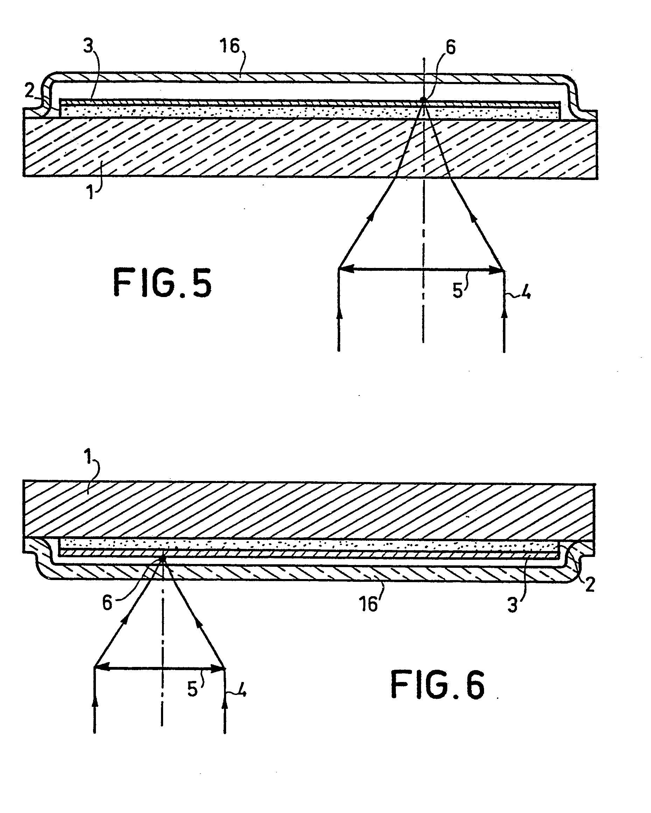

Sur la figure 5, on peut voir un support d'information réalisé au moyen d'un substrat transparent 1. La sous-couche 2 et la couche 3 sont protégées par un capot 16 qui ménage un espace vide au-dessus de la couche 3. L'inscription peut se faire au moyen d'un faisceau 4 qui traverse le substrat 1 et qui est focalisé sur la couche 3 par la lentille 5.

Sur la figure 6, on peut voir une variante de réalisation de support d'information de la figure 5. Le capot de protection 16 est ici permeable au rayonnement d'inscription et le substrat 1 peut être opaque si la lecture se fait par réflexion. Pour une lecture par transmission, les deux éléments donnant accès à la couche 3 doivent être permeables au rayonnement de lecture.

Un exemple typique de réalisation d'un support d'information conforme à l'invention pourrait avoir les caractéristiques suivantes: le substrat 1 est constitué par un disque un polyméthacrylate de méthyle de 356 mm de diamètre et de 1,5 mm d'épaisseur. Ce substrat est recouvert d'une sous-couche 2 de nitrocellulose de 100 nm d'épaisseur. Cette sous-couche 2 est déposée en partant d'une solution à 8 g de nitrocellulose dans un litre de "AZ Thinner" contenant 3% de plastifiant Di (2-ethyl-hexyl) phtalate. La couche est centrifugée à la vitesse de 6 tours . s$^{-1}$. Après évaporation complète du solvant à la température ordinaire, la sous-couche 2 est recouverte d'une couche 3 d'or de 7 nm par évaporation sous vide à la vitesse de $5 \cdot 10^{-2}$ nm . s$^{-1}$. L'inscription du support d'enregistrement est effectuée au travers du substrat avec un faisceau provenant d'un laser hélium néon ($\lambda$=633 nm) modulé à la fréquence de 10 MHz. L'objectif de projection utilisé possède une ouverture numérique de 0,45. Le disque étant entraîné à la vitesse de 25 tours . s$^{-1}$ et l'inscription se faisant selon un rayon de 130 mm, on a obtenu une succession d'empreintes de 0,7 $\mu$m de large avec un relief haut de 150 nm. Les empreintes ont une longueur suivant l'axe d'inscription égale à 1 $\mu$m et sont espacées de 1 $\mu$m pour une puissance incidente de 5 mW. Avec un tel support enregistré, le signal de lecture mesuré à l'analyseur de spectre et rapporté au bruit optique se situe à un niveau de 60 dB pour une bande de fréquence de 30 kHz. Ce support est donc tout à fait approprié au stockage de signaux vidéo de bonne qualité.

Le processus d'inscription thermo-optique qui vient d'être décrit se prête à la surimpression, car il est possible de réaliser plusieurs déformations de valeurs croissantes dans la plage AB de déformation plastique. En particulier, il est possible de créer à la surface du support d'information une piste vierge par exemple en forme de spirale et sur ce relief continu de réinscrire des données sous la forme d'une succession d'empreintes isolées qui viennent accentuer le relief préenregistré. Il est également possible d'assigner plus de deux valeurs signalétiques à l'information enregistrée notamment en jouant sur le contraste de phase et/ou sur le contraste d'amplitude.

### Revendications

1. Procédé d'inscription thermo-optique d'information consistant à échauffer superficiellement à l'aide d'un faisceau de rayonnement focalisé et modulé en intensité un support d'information thermosensible comportant une couche métallique (3) qui recouvre une couche organique (2) déposée sur un substrat (1), l'impact localisé du faisceau (4) créant une élévation de température transitoire qui intéresse l'ensemble couche métallique-couche organique, caractérisé en ce que ladite élévation de température, sans libérer une énergie mécanique préexistante dans ladite couche organique et sans modifier son état chimique, produit par dilatation thermique différentielle desdites couches un étirement irréversible de ladite couche métallique; ladite couche organique étant faite d'au moins un matériau polymère auquel il a été incorporée au moins une substance plastifiante destinée à donner à ladite dilatation différentielle une valeur telle que la tension d'étirement soit comprise entre la limite élastique ($\sigma_L$) et la charge de rupture ($\sigma_R$) de ladite couche métallique.

2. Procédé selon la revendication 1, caractérisé en ce que la couche organique (2) est déposée en partant d'une solution préparée au moyen d'un solvant; le solvant étant évaporé complètement avant de déposer la couche métallique (3).

3. Procédé selon l'une quelconque des revendications 1 et 2, caractérisé en ce que les couches organique (2) et métallique (3) sont protégées par un capot (16) fixé au support d'information.

4. Procédé selon l'une quelconque des revendications 1 à 3, caractérisé en ce qu'au moins deux phases d'inscription se succèdent en vue de créer un premier relief et de modifier localement ce premier relief par un second relief plus accusé que le premier relief.

5. Support d'information destiné à la mise en oeuvre du procédé selon la revendication 1 comprenant un substrat (1) sur lequel est déposée une couche organique (2) recouverte d'une couche métallique (3), caractérisé en ce que la couche métallique (3) a une épaisseur comprise entre 5 et 10 nm et une ductilité statique d'au moins 40%; la couche organique (2) étant constituée par au moins un polymère de base auquel est incorporé un adjuvant ayant des propriétés plastifiantes.

6. Support d'information selon la revendication 5, caractérisé en ce que la couche organique (2) a une épaisseur comprise entre 50 et 300 nm.

7. Support d'information selon la revendication 5, caractérisé en ce que le polymère de base est un dérivé de la cellulose.

8. Support d'information selon la revendication 5, caractérisé en ce que le polymère de base appartient au groupe comprenant les polyméthacrylates, les polycarbonates, le polystyrène et les polyuréthanes.

9. Support d'information selon l'une quelconque des revendications 5 à 8, caractérisé en ce que l'adjuvant est un diester de type phtalate, adipate, azelate ou sebacate.

10. Support d'information selon l'une quelconque des revendications 5 à 9, caractérisé en ce que la couche métallique (3) est faite d'un métal précieux, or, argent ou platine, d'un alliage entre ces métaux précieux ou d'un alliage de ces métaux précieux contenant au moins l'un des métaux: nickel, zinc, bismuth, cuivre, germanium.

11. Support d'information selon l'une quelconque des revendications 5 à 10, caractérisé en ce que la couche métallique (3) est munie d'une piste préenregistrée.

12. Support d'information selon l'une quelconque des revendications 5 à 11, caractérisé en ce que la couche métallique (3) est protégée par un capot (16) surplombant le support d'information.

13. Support d'information selon la revendication 10, caractérisé en ce que la couche métallique est un alliage $Cu_{20} Au_{80}$.

## Patentansprüche

1. Thermooptisches Aufzeichnungsverfahren von Informationen mithilfe eines fokalisierten und intensitätsmodulierten Strahlenbündels, das einen wärmeempfindlichen Informationsträger, der aus einem Substrat (1), einer darüberliegenden organischen Schicht (2) und einer metallischen Deckschicht (3) besteht, oberflächlich erhitzt, wobei sich durch das örtlich begrenzte Auftreffen des Bündels (4) eine vorübergehende Temperaturerhöhung ergibt, die die Metallschicht und die organische Schicht betrifft, dadurch gekennzeichnet, daß die Temperaturerhöhung ohne Freigabe einer schon vorher in der organischen Schicht vorhandenen mechanischen Energie und ohne Veränderung ihres chemischen Zustands durch differentielle thermisch Ausdehnung dieser Schichten eine irreversible Dehnung der Metallschicht bewirkt, wobei die organische Schicht aus mindestens einem Polymermaterial besteht, dem mindestens eine plastifizierende Substanz beigefügt ist, die dazu bestimmt ist, der differentiellen Ausdehnung einen solchen Wert zu verleihen, daß die Dehnungsspannung sich zwischen der Elastizitäts- ($\sigma_L$) und der Reißgrenze ($\sigma_R$) der Metallschicht einstellt.

2. Verfahren nach Anspruch 1, dadurch gekennzeichnet, daß die organische Schicht (2) derart aufgebracht wird, daß von einer mithilfe eines Lösungsmittel vorbereiteten Lösung ausgegangen wird und das Lösungsmittel vollständig verdampft, ehe die Metallschicht (3) aufgebracht wird.

3. Verfahren nach einem beliebigen der Ansprüche 1 und 2, dadurch gekennzeichnet, daß die organische (2) und die metallische Schicht (3) durch eine Haube (16) geschützt werden, die auf dem Informationsträger befestigt ist.

4. Verfahren nach einem beliebigen der Ansprüche 1 bis 3, dadurch gekennzeichnet, daß mindestens zwei Phasen des Aufzeichnungsvorgangs aufeinanderfolgen, durch die zuerst ein erstes Relief erzeugt wird und dann dieses erste Relief örtlich durch ein zweites, stärker als das erste Relief ausgeprägtes Relief verändert wird.

5. Informationsträger zur Anwendung des Verfahrens nach Anspruch 1 mit einem Substrat (1), auf dem eine organische Schicht (2) liegt, die von einer Metallschicht (3) bedeckt ist, dadurch gekennzeichnet, daß die Metallschicht (3) eine Dicke zwischen 5 und 10 nm und eine statische Duktilität von mindestens 40% besitzt, während die organische Schicht (2) aus mindestens einem Basispolymer besteht, dem ein Stoff mit plastifizierenden Eigenschaften zugesetzt ist.

6. Informationsträger nach Anspruch 5, dadurch gekennzeichnet, daß die organische Schicht (2) eine Dicke zwischen 50 und 300 nm aufweist.

7. Informationsträger nach Anspruch 5, dadurch gekennzeichnet, daß das Basispolymer ein Zelluloseprodukt ist.

8. Informationsträger nach Anspruch 5, dadurch gekennzeichnet, daß das Basispolymer aus der Gruppe ausgewählt ist, die von den Polymethacrylaten, den Polycarbonaten, dem Polystyrol und den Polyurethanen gebildet wird.

9. Informationsträger nach einem beliebigen der Ansprüche 5 bis 8, dadurch gekennzeichnet, daß der plastifizierende Zusatz ein Diester vom Typ Phtalat, Adipat, Azelat oder Sebacat ist.

10. Informationsträger nach einem beliebigen der Ansprüche 5 bis 9, dadurch gekennzeichnet, daß die Metallschicht (3) aus Edelmetall, Gold, Silber oder Platin, einer Legierung dieser Edelmetalle oder einer Legierung dieser Edelmetalle mit mindestens einem der Metalle Nickel, Zinc, Wismuth, Kupfer, Germanium besteht.

11. Informationsträger nach einem beliebigen der Ansprüche 5 bis 10, dadurch gekennzeichnet, daß die Metallschicht (3) eine bereits vorher beschriebene Spur aufweist.

12. Informationsträger nach einem beliebigen der Ansprüche 5 bis 11, dadurch gekennzeichnet, daß die Metallschicht (3) von einer Haube (16) geschützt ist, die den Informationsträger überwölbt.

13. Informationsträger nach Anspruch 10, dadurch gekennzeichnet, daß die Metallschicht aus einer Legierung $Cu_{20}A_{80}$ besteht.

## Claims

1. A method for the thermooptical inscription of informations consisting of superficially heating a thermosensible information support by means of a focussed and intensity modulated radiation beam, the support comprising a substrate (1), an organic layer (2) coated thereon and a metal layer (3) covering the latter, the localized impact of the beam (4) creating a temporary temperature increase which acts on the metal layer organic layer assembly, characterized in that the increase in temperature produces, without any release of a mechanical energy preexisting in said organic layer and without any modification of its chemical state, by differential thermal expansion of said layers an irreversible stretching of said metal layer, and that said organic layer is made of at least one polymer material to which at least one plastifying substance is added which is designed to define the value of said differential expansion in such a way that the stretch tension is situated between the limit of elasticity ($\sigma_L$) and the tear strength ($\sigma_R$) of said metal layer.

2. A method according to claim 1, characterized in that the coating of the organic layer (2) is effected by starting with a solution prepared by means of a solvent and by evaporating completely the solvent prior to the application of the metal layer (3).

3. A method according to any one of claims 1 and 2, characterized in that the organic (2) and metal layers (3) are protected by a cover (16) which is attached to the information support.

4. A method according to any one of claims 1 to 3, characterized in that at least two inscription phases are performed in succession by which a first relief is created and then this relief is locally modified by a second relief which is more accentuated than the first relief.

5. An information support conceived to be subjected to the method according to claim 1, comprising a substrate (1) on which an organic layer (2) is coated, the latter being covered by a metal layer (3), characterized in that the thickness of the metal layer (3) is included between 5 and 10 nm and that the static ductility of said layer is at least 40%, the organic layer (2) consisting of at least a base polymer material to which a plastifying agent is added.

6. An information support according to claim 5, characterized in that the thickness of the organic layer (2) is included between 50 and 300 nm.

7. An information support according to claim 5, characterized in that the base polymer material is a cellulose derivative.

8. An information support according to claim 5, characterized in that the base polymer material belongs to the group consisting of the polymethacrylates, the polycarbonates, the polystyrene and the polyurethanes.

9. An information support according to any one of claims 5 to 8, characterized in that the plastifying agent is a diester of the phthalate, adipate, acelate or sebacate type.

10. An information support according to any one of claims 5 to 9, characterized in that the metal layer (3) is made of a noble metal, gold, silver or platinum, an alloy of these noble metals or an alloy of these noble metals containing at least one of the further metals nickel, zinc, bismuth, copper, germanium.

11. An information support according to any one of the claims 5 to 10, characterized in that the metal layer (3) is provided with a track which has been preinscribed.

12. An information support according to any one of the claims 5 to 11, characterized in that the metal layer (3) is protected by a cover (16) which vaults over the information support.

13. An information support according to claim 10, characterized in that the metal layer is made of an alloy $Cu_{20}A_{80}$.

FIG.1

FIG.2

FIG.3

FIG.4

FIG.5

FIG.6